# EUROPEAN PATENT APPLICATION

(11) **EP 4 599 946 A1**
(43) Date of publication of application: **13.08.2025**
(21) Application number: 23874511.1
(22) Date of filing: 01.08.2023
(51) Int. Cl.: B07C 5/36, B65G 47/46

(54) **CROSSBELT SORTER**

(30) Priority: 03.10.2022 JP 2022159566
(71) Applicant: Fives Intralogistics K.K., Kobe-shi, Hyogo 650-0047 (JP)
(72) Inventor: KAMAYA, Toshifumi, Kobe-shi, Hyogo 650-0047 (JP)
(74) Representative: Fives IP
(86) International application number: PCT/JP2023/028078
(87) International publication number: WO 2024/075378

(57) **Abstract**

To provide a crossbelt sorter that automatically and safely resolves abnormal loading states of cargo, such as when two pieces of cargo are loaded in one cell, or when cargo is outside of the cell. The system has a cargo status analysis zone which analyzes the status of the cargo in a cell after being loaded, and an abnormality response zone which responds when the cargo status analysis zone determines that the cargo status is abnormal. In the cargo status analysis zone, the status of the cargo in each cell on the main conveyor is analyzed by photographing with a camera from above and/or by a laser sensor. If the analysis in the cargo status analysis zone determines that there is an abnormality in which two pieces of cargo are present in one cell, then in the abnormality response zone, one of the pieces of cargo in that cell is removed by a robot. If an abnormality is determined in which a piece of cargo has deviated from the cell, then in the abnormality response zone, the piece of cargo that has deviated from the cell is removed, and the removed piece of cargo is then moved to a reject chute or an empty cell, or the like.

## Description

### TECHNICAL FIELD

The present invention relates to a crossbelt sorter that can use a simple method to automatically analyze and safely resolve abnormal loading states of cargo, such as when two pieces of cargo are loaded in one cell, or when cargo is outside of a cell.

### BACKGROUND ART

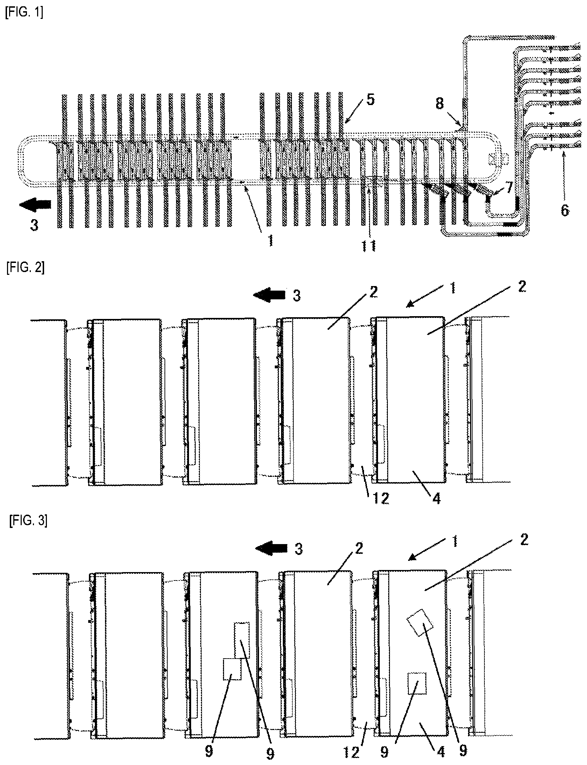

A typical example of a conventional crossbelt sorter is depicted in FIGS. 1 and 2. FIG. 1 is an overall plan view of an example of a sorting system including a crossbelt sorter installed on-site, and FIG. 2 is a partial plan view of the state in which the cells of the crossbelt sorter are successively arranged. As depicted in FIGS. 1 and 2, the crossbelt sorter has cells 2 successively arranged on a main conveyor 1 that travels in a loop, with drop preventing plates 12 between cells, and each cell 2 includes a conveyor belt 4 that travels in a direction transverse to the direction of travel 3 of the main conveyor 1. The conveyor belt 4 of each cell 2 operates independently to automatically sort cargo that has been placed in the cell 2 into a chute 5 on the side of the main conveyor 1.

In an actual sorting system using a crossbelt sorter, as depicted in FIG. 1, cargo unloaded from trucks, containers, carts, and the like is transported from an unloading conveyor 6 to a loading unit 7 for the crossbelt sorter, and the cargo from the conveyor of loading unit 7 is input one by one onto the conveyor belt 4 of each cell 2. The loaded cargo travels in conjunction with the movement of the main conveyor 1 that is moving in a loop, and when the cargo reaches a side of a chute 5 to which the cargo is assigned, the cargo in the cell 2 is automatically discharged to the chute 5 by the conveyor belt 4. The destination chute 5 is generally determined by reading sorting information in a bar code attached to the cargo by a bar code reader 11. Cargo that cannot be sorted into the destination chute 5 for reasons such as the sorting information not being read by the bar code reader 11 is sent to a reject chute 8 that collects erroneous items.

In a system using a conventional crossbelt sorter having the aforementioned configuration, the following two problems frequently occur in the field.

The first problem is that two pieces of cargo 9 may end up on the conveyor belt 4 in one cell 2 as depicted in FIG. 3. This occurs, for example, when two pieces of cargo 9 are transported in parallel when transporting cargo 9 from the unloading conveyor 6 to the loading unit 7, and the two pieces of cargo 9 are accidentally loaded into one cell 2.

In this manner, when two pieces of cargo 9 are placed on the conveyor belt 4 of cell 2, the operation of the conveyor belt 4 causes the two pieces of cargo 9 to be sorted simultaneously into the same chute 5, and thus the two pieces of cargo 9 to be individually sorted into the appropriate destination chute 5. Furthermore, when two pieces of cargo 9 are loaded side by side on the conveyor belt 4 of cell 2, the barcode reader 11 might not be able to completely and properly read the barcodes 10 containing the sorting information for the two pieces of cargo 9.

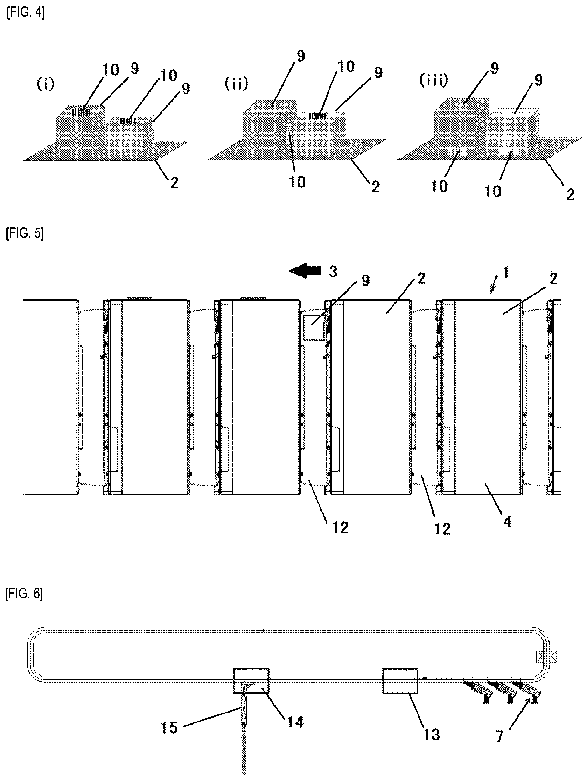

As depicted in FIG. 4(i), the barcodes 10 of two pieces of cargo 9 on cell 2 are positioned to be easy to read, and if both barcodes 10 can actually be read by the barcode reader 11, an abnormality that there are two pieces of cargo 9 in one cell 2 is determined, and these pieces of cargo 9 can be easily sent to the reject chute 8 by the conveyor belt 4 of cell 2.

However, if one of the barcodes 10 of the two pieces of cargo 9 in cell 2 cannot be read by barcode reader 11 because the barcode 10 is sandwiched between the two pieces of cargo 9, as in FIG. 4 (ii), then both pieces of cargo 9 in cell 2 will be sorted into the chute 5 designated by the barcode 10 of the one piece of cargo 9 that was read, resulting in mis-sorting of the cargo 9 whose barcode 10 could not be read. Furthermore, as depicted in FIG. 4 (iii), if the barcodes 10 of two pieces of cargo 9 in the cell 2 are positioned such that neither barcode 10 can be read by the barcode reader 11, the sorting destination of the two pieces of cargo 9 will be determined to be unknown, and the cargo 9 will be sent to the reject chute 8.

The second problem is that when slippery cargo 9 or rollable cargo 9 is placed in a cell 2, the cargo 9 might not remain in the cell 2, and the cargo 9 might land on a drop preventing plate 12 between the cells 2 as depicted in FIG. 5, or the cargo 9 might protrude far beyond the cell 2, causing the cargo 9 to deviate from the cell 2 and end up between adjacent cells 2. When this happens, the conveyor belt 4 of cell 2 will not be able to properly move the cargo 9 that has deviated from the cell 2, so the main conveyor 1 must be stopped or the problem cargo 9 must be manually removed while the main conveyor 1 is operating. Since the cargo 9 that deviates from the cell 2 is loaded in an unstable state outside the cell 2 of the main conveyor 1, there is a risk that the cargo 9 will be dropped and damaged, and there is also a possibility that the dropped cargo 9 will be trapped in the cell 2 and be crushed.

When an abnormal loading problem of the cargo 9 occurs as described above, the main conveyor 1 should be stopped for safety reasons, and then recovery work is carried out, such as manually removing the cargo 9. However, at the site, it is common for people to try to remove the cargo 9 manually while the main conveyor 1 loop is still running, and this creates an extremely dangerous situation. Therefore, there is a strong demand for a crossbelt sorter that can safely and automatically eliminate these problems and prevent trouble caused by abnormal loading states of cargo, thereby enabling stable operation of the facility.

### RELATED ART DOCUMENTS

### Patent Documents

Patent Document 1: Japanese Unexamined Patent Application Publication 2005-255330
Patent Document 2: Japanese Unexamined Patent Application Publication 2017-48018
Patent Document 3: Japanese Unexamined Patent Application Publication 2019-189455
Patent Document 4: Japanese Unexamined Patent Application Publication 2021-84790
Patent Document 5: Japanese Unexamined Patent Application Publication 2020-189721

### SUMMARY OF THE INVENTION

### PROBLEM TO BE SOLVED BY THE INVENTION

In light of the foregoing, an object of the present invention is to provide a crossbelt sorter that can automatically, safely, and in an efficient manner, eliminate abnormal loading states of cargo, such as two pieces of cargo being loaded in one cell, or cargo being outside of a cell.

### MEANS FOR SOLVING THE PROBLEM

As a result of extensive research into achieving this object, the present inventors discovered that by sequentially providing a cargo status analysis zone in which the status of the cargo in the cells is analyzed by camera photography and/or a laser sensor after the cargo is loaded into the crossbelt sorter, and an abnormality response zone which responds when the cargo status is found to be abnormal, and if the analysis determines an abnormal cargo loading status, the abnormality response zone responds by having a robot remove the problematic cargo, thereby enabling automatic and efficient resolution of the abnormal cargo loading status without human intervention. Thereby, the present invention was achieved.

The present invention was achieved based on these findings and has the following aspects (1) to (10).
(1) A crossbelt sorter where cells containing conveyor belts moving in a transverse direction to the direction of travel of a main conveyor are successively arranged on the main conveyor that travels in a loop, and the conveyor belts of each cell operate independently to automatically move cargo placed in the cell to an assigned destination chute on a side of the main conveyor for sorting cargo, wherein the crossbelt sorter has a cargo status analysis zone that analyzes the status of the cargo in the cell after the cargo is loaded thereon, and an abnormality response zone that responds when the cargo status is analyzed as abnormal in the cargo status analysis zone, such that the status of the cargo in each cell on the main conveyor is analyzed by photographing with a camera from above and/or by a laser sensor, and if the analysis in the cargo status analysis zone detects an abnormality in which two pieces of cargo are present in one cell, one piece of cargo in that cell is removed by a robot in the abnormality response zone.
(2) The crossbelt sorter according to (1), wherein a reject chute configured to sort pieces of cargo that are found to be abnormal is provided on a side of the main conveyor in the abnormality response zone, and removed pieces of cargo are moved to the reject chute by a robot.
(3) The crossbelt sorter according to (1), wherein the removed cargo is moved by a robot to an empty cell that does not contain any cargo.
(4) A crossbelt sorter where cells containing conveyor belts moving in a transverse direction to the direction of travel of a main conveyor are successively arranged on the main conveyor that travels in a loop, and the conveyor belts of each cell operate independently to automatically move cargo placed in the cell to an assigned destination chute on a side of the main conveyor for sorting cargo, wherein the crossbelt sorter has a cargo status analysis zone that analyzes the status of the cargo in the cell after the cargo is loaded thereon, and an abnormality response zone that responds when the cargo status is analyzed as abnormal in the cargo status analysis zone, such that the status of the cargo in each cell on the main conveyor is analyzed by photographing with a camera from above and/or by a laser sensor, and if the analysis in the cargo status analysis zone detects an abnormality in which cargo has deviated from the cell, the cargo in that cell that has deviated is removed by a robot in the abnormality response zone.
(5) The crossbelt sorter according to (4), wherein a reject chute configured to sort pieces of cargo that are found to be abnormal is provided on a side of the main conveyor in the abnormality response zone, and removed pieces of cargo are moved to the reject chute by a robot.
(6) The crossbelt sorter according to (4), wherein the robot is configured to return a removed piece of cargo to the originally intended cell.
(7) The crossbelt sorter according to (4), wherein the removed cargo is moved by a robot to an empty cell that does not contain any cargo.
(8) The crossbelt sorter according to any one of (1) to (7), wherein the robot has suction cups for suctioning onto cargo, and the cargo is suctioned from above by the suction cups of the robot and removed.
(9) The crossbelt sorter according to any one of (1) to (7), wherein the robot has a hand part for grasping the cargo, and the hand part of the robot is configured to grasp and remove the cargo from above.
(10) A crossbelt sorter according to any one of (1) to (7), wherein when removing cargo in the abnormality response zone, the robot is configured to travel in the direction of travel of the main conveyor above the cargo in synchronization with the speed of the main conveyor in the direction of travel.

### EFFECT OF THE INVENTION

The crossbelt sorter of the present invention is configured to automatically analyze and appropriately resolve even a situation where two pieces of cargo are placed in one cell, so there is no problem with erroneous sorting where two pieces of cargo are sent to the same chute, and thus recovery work and associated costs are not required. In addition, the crossbelt sorter of the present invention is configured to automatically analyze and appropriately resolve situations in which cargo deviates from a cell, so there is no risk of cargo being unstably transported while the main conveyor is operating, and thus the cargo will not fall and be damaged, and will not get trapped in operating machinery, and thus recovery work and associated costs are not required.

### BRIEF DESCRIPTION OF THE DRAWINGS

FIG. 1 is an overall plan view of an example of a sorting system including a conventional crossbelt sorter installed on-site;
FIG. 2 is a partial plan view depicting an example of a state in which cells of a conventional crossbelt sorter are successively arranged;
FIG. 3 is a partial plan view depicting an example of a state in which two pieces of cargo are placed in one cell of the crossbelt sorter;
FIG. 4 is an explanatory diagram depicting examples of various barcode reading situations when two pieces of cargo are placed in one cell of a crossbelt sorter, depicted in (i) to (iii);
FIG. 5 is a partial plan view depicting an example of a state in which cargo is present outside a cell of the crossbelt sorter;
FIG. 6 is a schematic overall plan view depicting an example of the crossbelt sorter of the present invention;
FIG. 7 is a side view depicting an example of a configuration in which camera photography is adopted in the cargo status analysis zone of the crossbelt sorter of the present invention;
FIG. 8 is a side view depicting an example of a configuration in which a laser sensor is used in the cargo status analysis zone of the crossbelt sorter of the present invention;
FIG. 9 is a plan view depicting an example of the configuration of an abnormality response zone of the crossbelt sorter of the present invention; note that although the robot-related parts are present on the main conveyor, these parts are omitted for clarity in describing the configuration;
FIG. 10 is a side view depicting an example of a configuration of an abnormality response zone of the crossbelt sorter of the present invention; and
FIG. 11 is an explanatory diagram depicting examples of situations (i) to (iii) in which a robot moves cargo to a side reject chute in the abnormality response zone of the crossbelt sorter of the present invention.

### DESCRIPTION OF THE PREFERRED EMBODIMENTS

An embodiment of a crossbelt sorter according to the present invention is described below in detail, with reference to the drawings, but the present invention is not limited to these embodiments.

The crossbelt sorter of the present invention is configured to monitor abnormal states such as (i) a state in which two pieces of cargo are placed in one cell, and/or (ii) a state in which a piece of cargo has deviated from a cell and is placed in a location such as on a drop preventing plate between the cells, and can safely and automatically resolve such abnormal states when **detected.** The crossbelt sorter of the present invention has basically the same configuration as conventional crossbelt sorters, but also has a cargo status analysis zone and an abnormality response zone after cargo is loaded, and for example, the crossbelt sorter depicted in FIGS. 1 and 2 above can be adopted as the basic configuration.

FIG. 6 depicts a schematic overall plan view of an example of a crossbelt sorter according to the present invention. As depicted in FIG. 6, FIG. 1, and FIG. 2, the crossbelt sorter of the present invention has cells 2 made of conveyor belts 4 moving in a transverse direction to the direction of travel 3 of the main conveyor 1, successively arranged on a main conveyor 1 that travels in a loop, and drop preventing plates 12 that are arranged between cells 2. In the crossbelt sorter of the present invention, as in the conventional crossbelt sorter, when cargo unloaded from a truck or the like is transported from an unloading conveyor 6 to a loading unit 7 of the crossbelt sorter, the cargo is loaded from the conveyor at the loading unit 7 into a cell 2, and the cargo loaded into the cell 2 is automatically sorted into an assigned destination chute 5 on a side of the main conveyor 1 by an independent operation of the conveyor belt 4 of the cell 2. The destination of the cargo on the chute 5 at this time is determined by reading a bar code indicating sorting information attached to the cargo by a bar code reader 11 located on the side of the main conveyor 1, for example.

As depicted in FIG. 6, the crossbelt sorter of the present invention is provided with a cargo status analysis zone 13 which analyzes the status of the cargo in the cell after the cargo is loaded, and an abnormality response zone 14 which responds when the cargo status analysis zone 13 determines that the cargo status is abnormal. These zones monitor for the presence of two pieces of cargo in a cell and deviation of cargo from the cell, and automatically take action to resolve these abnormal states when detected.

In the cargo status analysis zone 13, the status of the cargo placed in each cell 2 on the main conveyor 1 is monitored, and the status is analyzed for being abnormal. Here, "in a cell" means "on the conveyor belt of the cell", and the state of the cargo refers to the presence, position and/or shape of cargo in each cell 2 on the main conveyor 1. In the present invention, the state of the cargo is monitored and determined by photographing with a camera from above and/or by a laser sensor. Methods of determining the state of cargo using camera photography from above or laser sensors are conventionally known to a person of ordinary skill in the art, and these known methods can be adopted as appropriate.

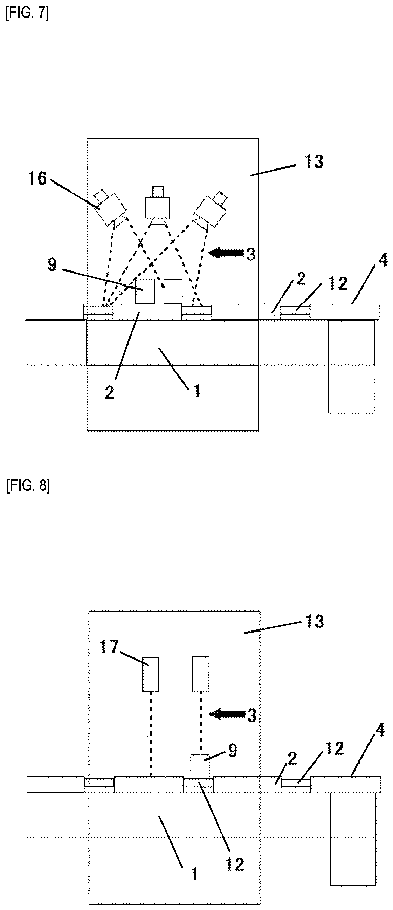

When using camera photography, for example as depicted in FIG. 7, one or a plurality of cameras 16 are installed above the main conveyor 1 and photographs are repeatedly taken downward to monitor the state of the cargo 9 in the cell 2. The photographed images are then processed by a computer, allowing the state of the cargo 9 to be determined in three dimensions. In addition, when using a laser sensor, for example as depicted in FIG. 8, one or a plurality of laser sensors 17 are installed above the main conveyor 1, and in order to monitor the state of the cargo 9 in the cell 2, a laser is repeatedly irradiated toward the cell 2 below, the reflected light is detected, and the detected light is converted into an electrical signal. A three-dimensional image is obtained from the electrical signal using a computer, thereby enabling determination of the state of the cargo 9.

In the cargo status analysis zone 13, the state of the cargo in the cell 2 on the main conveyor 1 obtained by camera photography and/or laser sensors is analyzed to determine whether the state is abnormal, or in other words, an abnormal state in which two pieces of cargo 9 are in one cell 2 as depicted in FIG. 7, and/or whether a piece of cargo 9 is outside the cell 2 (for example, on the drop preventing plate 12 between the cells 2) as depicted in FIG. 8. Regarding the deviation of the cargo 9 from the cell 2, various criteria can be set, such as whether or not more than half of the bottom area of the cargo 9 in the cell 2 deviates. In either case, in the cargo status analysis zone 13, either the camera photography or the laser sensor may be used alone, or both may be used in combination. When analyzing abnormal states, whether or not abnormal states exist can be determined based on information on the presence, position and/or shape of each piece of cargo 9 in the cell 2 captured by the camera, for example, using a computer equipped with AI.

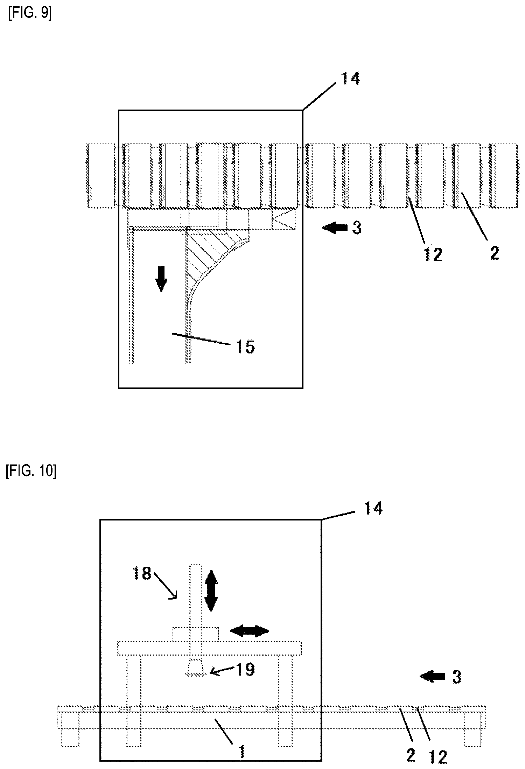

If an abnormality is not found in the cargo status analysis zone 13, the cargo 9 in the cell 2 will proceed as is, and will be automatically sorted to the destination chute 5. However, if it is determined that the state of the cargo 9 is abnormal, then, as depicted in FIGS. 6 and 9, measures are taken to resolve the abnormal state in that abnormality response zone 14, which is provided separately from the cargo status analysis zone 13.

Specifically, if an abnormality is detected in the cargo status analysis zone 13 such as when two pieces of cargo 9 are in one cell 2 as depicted in FIG. 3, a robot will be used to remove one of the two pieces of cargo 9 in that cell 2 in the abnormality response zone 14 depicted in FIGS. 6 and 9. As depicted in FIGS. 6 and 9, a reject chute 15 is provided on the side of the main conveyor 1 in the abnormality response zone 14. If two pieces of cargo 9 are loaded in one cell, the removed cargo 9 can be moved to the reject chute 15 by a robot. Alternatively, the removed cargo 9 can be moved by the robot to an empty cell that does not contain any cargo 9. The cargo 9 that is moved to the empty cell is sorted into the chute 5 of the correct destination by reading the bar code 10 indicating sorting information that is attached to the cargo 9.

Furthermore, if an abnormality is detected in which cargo 9 has deviated from the cell 2, the cargo 9 that has deviated from the cell 2 is removed by a robot in the abnormality response zone 14 depicted in FIGS. 6 and 9. If cargo 9 has deviated from the cell 2, the removed cargo 9 can be moved by the robot to a reject chute 15. Alternatively, the removed cargo 9 can be placed by the robot back onto the cell 2 where the cargo 9 was intended to be loaded. Alternatively, **the removed** cargo 9 can be moved by the robot to an empty cell that does not contain cargo 9. The cargo 9 that has been moved to the intended cell or an empty cell is sorted into the chute 5 of the correct destination by reading the bar code 10 indicating sorting information that is attached to the cargo 9.

There are no particular limitations on the robot to be installed in the abnormality response zone 14, so long as the robot is suitable for use in removing and moving cargo as described above, and any conventionally known robot can be used as appropriate. As depicted in FIG. 10, for example, the robot is preferably provided above the cell 2 in the abnormality response zone 14, and can move in any direction including the direction of travel 3 of the main conveyor 1, the sorting direction perpendicular thereto, and the vertical direction. The robot 18 preferably has suction cups 19 capable of suctioning onto the cargo 9, for example, the suction cups 19 of the robot 18 preferably descend from above to suction onto the cargo 9 using the suction cups 19, and the suctioned cargo 9 can be lifted up to be removed, or moved in the direction of travel 3, or in a direction perpendicular thereto, and then lowered again to release the suction and move the cargo 9. Alternatively, the robot preferably has a hand part (not depicted) that can, for example, grasp the cargo 9, and the hand part of the robot 18 can descend from above, grasp the cargo 9, and travel in a similar manner to remove or move the cargo. The robot 18 may be a gantry type robot having a structure in which a plurality of orthogonal sliding axes are combined, or may be an articulated robot. Note that removing cargo 9 in the abnormality response zone 14 is preferably performed by moving the robot 18 above the cargo 9 in the direction of travel 3 of the main conveyor 1 in synchronization with the movement and speed in the direction of travel 3 of the main conveyor 1. Thereby, smooth and safe removal of the cargo can be achieved without stopping the main conveyor 1.

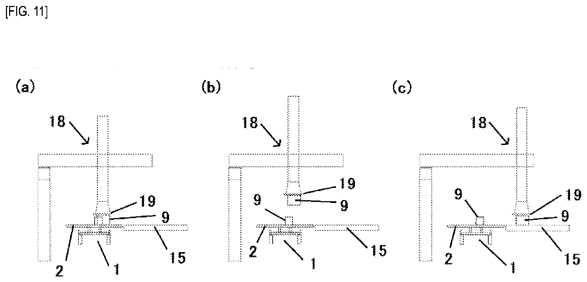

FIG. 11 depicts an example of a robot having suction cups capable of suctioning in order to remove or move the cargo. For example, if analysis in the cargo status analysis zone 13 reveals an abnormality where two pieces of cargo 9 are present in one cell 2, first, as depicted in FIG. 11(a), the suction cup 19 of the robot 18 descends from above onto the cargo 9 to be removed and picks up the cargo 9, and then, as depicted in FIG. 11(b), the robot 19 travels upward with the cargo 9 still in a state of suction, thereby removing the cargo 9 from the cell 2, and furthermore, as depicted in FIG. 11(c), the removed cargo 9 can be moved to a reject chute 15 on the side of the main conveyor 1.

In FIG. 11, the robot 18 moves the removed cargo 9 to the reject chute 15, but instead of moving the removed cargo 9 to the reject chute 15, the robot 18 can travel back and forth in the direction of travel 3 of the main conveyor 1, or not travel at all, and move the cargo into an empty cell that does not contain any cargo 9. In addition, FIG. 11 depicts movement of the robot 18 when there are two pieces of cargo 9 in one cell 2, but if an abnormality is detected in which the cargo 9 has deviated from the cell 2, for example, being present on the drop preventing plate 12 between the cells 2, the robot 18 can similarly suction or grasp the cargo 9 and remove the cargo upward, and the removed cargo can be moved to the reject chute 15 or to an empty cell that does not contain any cargo 9, or returned to the cell 2 in which the cargo 9 was originally intended to be loaded.

A typical example of the crossbelt sorter of the present invention has been described above, but the crossbelt sorter of the present invention is not restricted in particular as long as there is a cargo status analysis zone that can analyze and determine abnormal states such as two pieces of cargo in a cell and/or a piece of cargo deviating from a cell using camera photography and/or a laser sensor, and an abnormality response zone that can resolve the abnormality using a robot, based on the determination, and therefore conventionally known technologies can be added, modified, or deleted. The basic configurations of the crossbelt sorter, the camera photography and laser sensor detection of abnormal states, and the robot removing and moving cargo can be appropriately adopted or modified from conventional known configurations.

### INDUSTRIAL APPLICABILITY

The crossbelt sorter of the present invention can use a simple method to automatically analyze and safely resolve abnormal loading states of cargo, such as when two pieces of cargo are loaded in one cell or when cargo is outside the cell.

### DESCRIPTION OF CODES

1 Main conveyor
2 Cell
3 Direction of travel
4 Conveyor belt
5 Chute
6 Unloading conveyor
7 Loading unit
8 Reject chute
9 Cargo
10 Bar code
11 Barcode reader
12 Drop preventing plate
13 Cargo status analysis zone
14 Abnormality response zone
15 Reject chute
16 Camera
17 Laser sensor
18 Robot
19 Suction cup

## Claims

1. A crossbelt sorter where cells containing conveyor belts moving in a transverse direction to the direction of travel of a main conveyor are successively arranged on the main conveyor that travels in a loop, and the conveyor belts of each cell operate independently to automatically move cargo placed in the cell to an assigned destination chute on a side of the main conveyor for sorting cargo, wherein the crossbelt sorter has a cargo status analysis zone that analyzes the status of the cargo in the cell after the cargo is loaded thereon, and an abnormality response zone that responds when the cargo status is analyzed as abnormal in the cargo status analysis zone, such that the status of the cargo in each cell on the main conveyor is analyzed by photographing with a camera from above and/or by a laser sensor, and if the analysis in the cargo status analysis zone detects an abnormality in which two pieces of cargo are present in one cell, one piece of cargo in that cell is removed by a robot in the abnormality response zone.

2. The crossbelt sorter according to claim 1, wherein a reject chute configured to sort pieces of cargo that are found to be abnormal is provided on a side of the main conveyor in the abnormality response zone, and removed pieces of cargo are moved to the reject chute by a robot.

3. The crossbelt sorter according to claim 1, wherein the removed cargo is moved by a robot to an empty cell that does not contain any cargo.

4. A crossbelt sorter where cells containing conveyor belts moving in a transverse direction to the direction of travel of a main conveyor are successively arranged on the main conveyor that travels in a loop, and the conveyor belts of each cell operate independently to automatically move cargo placed in the cell to an assigned destination chute on a side of the main conveyor for sorting cargo, wherein the crossbelt sorter has a cargo status analysis zone that analyzes the status of the cargo in the cell after the cargo is loaded thereon, and an abnormality response zone that responds when the cargo status is analyzed as abnormal in the cargo status analysis zone, such that the status of the cargo in each cell on the main conveyor is analyzed by photographing with a camera from above and/or by a laser sensor, and if the analysis in the cargo status analysis zone detects an abnormality in which cargo has deviated from the cell, the cargo in that cell that has deviated is removed by a robot in the abnormality response zone.

5. The crossbelt sorter according to claim 4, wherein a reject chute configured to sort pieces of cargo that are found to be abnormal is provided on a side of the main conveyor in the abnormality response zone, and removed pieces of cargo are moved to the reject chute by a robot.

6. The crossbelt sorter according to claim 4, wherein the robot is configured to return a removed piece of cargo to the originally intended cell.

7. The crossbelt sorter according to claim 4, wherein the removed cargo is moved by a robot to an empty cell that does not contain any cargo.

8. The crossbelt sorter according to any one of claims 1 to 7, wherein the robot has suction cups for suctioning onto cargo, and the cargo is suctioned from above by the suction cups of the robot and removed.

9. The crossbelt sorter according to any one of claims 1 to 7, wherein the robot has a hand part for grasping the cargo, and the hand part of the robot is configured to grasp and remove the cargo from above.

10. A crossbelt sorter according to any one of claims 1 to 7, wherein when removing cargo in the abnormality response zone, the robot is configured to travel in the direction of travel of the main conveyor above the cargo in synchronization with the speed of the main conveyor in the direction of travel.
